# EUROPEAN PATENT APPLICATION

(11) **EP 0 921 344 A1**
(43) Date of publication of application: **09.06.1999**
(21) Application number: 98850183.9
(22) Date of filing: 01.12.1998
(51) Int. Cl.: F16N 39/04, F01M 5/00, F01M 5/02

(54) **Heating of a bearing**

(30) Priority: 04.12.1997 SE 9704511
(71) Applicant: SKF Nova AB, 412 88 Göteborg (SE)
(72) Inventor: Rosengren, Filip, 417 28 Göteborg (SE)
(74) Representative: Westman, P. Börje I.

(57) **Abstract**

The present invention relates to the use of a phase convertible compound for heating a fat lubricated bearing, whereby the compound absorbs frictional heat generated at operation of the bearing, stores said heat until needed, whereupon the heat is released when bringing said bearing into operation under cold operational conditions. The invention further relates to a method for lubricating a bearing, as well as a bearing so lubricated.

## Description

### Technical field

The present invention relates to the heating of a bearing.

The object of the present invention is to obtain a possibility of heating a bearing in order to obtain a bleeding of the fat used to lubricate the bearing.

### Background of the invention

In starting an equipment at a low temperature comprising fat lubricated bearings there is a problem in that the fat does not bleed oil in a sufficient amount to facilitate a good start and to suppress high friction coefficients. This will sometimes result in damages of the bearing, e.g. burnishing.

One way of avoiding this problem has been to use a low-temperature fat, i.e. a fat which will bleed at a lower temperature than a normally used lubricating fat will. However, it has turned out that even low-temperature fats have difficulties in bleeding oil at really low temperatures, i.e. at very cold weather conditions, which may occur in winter time in the Nordic countries, Canada, Northern USA, the Arctic, and Antarctic areas as well as northem Russia and Asia.

Thus there is a demand for solving this problem in a more efficient way.

### Description of the present invention

It has now surprisingly been shown possible to solve this problem by means of the present invention, which is characterized in that one applies a heat absorbing composition in contact with the bearing to be heated, that the heat absorbing composition absorbs frictional heat created during operation conditions, and that said absorbed heat is released when putting the bearing into operation, such as at the start of a cold engine.

Further characteristics will be evident from the accompanying claims.

By means of the present invention heat will be provided to the bearing whereby the lubricating fat will be able to bleed oil and thereby to provide ample lubrication.

By applying an absorbing medium in or close to the bearing, e.g. in the bearing house, it is possible primarily to absorb the frictional heat generated in the bearing during operation, to store said generated heat, and to release the heat needed to have a lubricating fat bleeding its oil to provide lubrication to the bearing as such.

In a preferred embodiment of the invention a salt solution is used, which passes a phase transition when absorbing heat, viz, going from a solid state to liquid state when absorbing heat, such as frictional heat, and which liquid remains stable until a reversed phase transition is initiated. Such an initiation can be carried out using a e.g. a mechanical vibration of any type. When the phase transition has been initiated and is obtained, heat will be released as the salt solution goes from a liquid state to a solid state, which heat will warm the lubricating fat of the bearing.

Most salts, in particular crystalline salts, will form phase transition system which releases heat, and the one skilled in the art only has to determine which one that has the most suitable temperature range for its phase transition.

One suitable salt solution is sodium chloride in acetic acid, which when going from solution to solid state expresses quite an amount of heat.

Storing heat in this way is already known and carried out in other technical areas for other purposes, e.g. so called heating pads. These are used for health care, but can also be used for rapid heating of hands and feet outdoors on chilly days.

The medium used can be applied to the bearing in a package in the bearing house or be applied as a surface coating on the inner walls of the bearing house.

The salt solution comprises a single salt or mixture of inorganic salts, or the heat absorbing solution can consist of an organic acid or compound which has the same ability of absorbing heat during phase conversion.

## Claims

1. The use of a phase convertible compound for heating a fat lubricated bearing, whereby the compound absorbs frictional heat generated at operation of the bearing, stores said heat until needed, whereupon the heat is released when bringing said bearing into operation under cold operational conditions.

2. A method for lubricating a bearing using a lubricating fat, **characterized** in that one applies a heat absorbing composition in contact with the bearing to be heated, that the heat absorbing composition absorbs frictional heat created during operation conditions, and that said absorbed heat is released when putting the bearing into operation, in order to make lubricating fat used to lubricate said bearing to bleed.

3. A method according to claim 2, **characterized** in that said heat absorbing compound is a salt which in solution transforms from solid to stable liquid state when absorbing heat and reverts to said solid state when releasing heat.

4. A method according to claim 2, **characterized** in that said heat absorbing compound is an organic compound.

5. A method according to one or more of claims 2-4, **characterized** in that the heat absorbing/heat releasing compound is provided in a package in close contact with said bearing.

6. A method according to claim 5, **characterized** in that the heat absorbing/heat releasing compound is provided as a coating onto a surface of the bearing.

7. Bearing to be lubricated by a fat and comprising a heat absorbing compound which is arranged to absorb heat while said bearing is in operation, to store said heat and to release said heat when said bearing is brought into operation under cold conditions, whereby said heat released is arranged to cause a fat used for lubrication to bleed oil.
